# EUROPEAN PATENT SPECIFICATION

(11) **EP 4 256 874 B1**
(45) Date of publication and mention of the grant of the patent: **13.05.2026**
(21) Application number: 21916745.9
(22) Date of filing: 06.01.2021
(51) Int. Cl.: H04L 1/1607, H04L 1/1829, H04L 1/1867, H04L 5/00, H04W 72/04, H04W 72/21

(54) **METHOD AND DEVICE FOR DETERMINING PUCCH OF DELAYED HARQ-ACK CODEBOOK**
VERFAHREN UND VORRICHTUNG ZUR BESTIMMUNG DES PUCCH EINES VERZÖGERTEN HARQ-ACK-CODEBUCHS
PROCÉDÉ ET DISPOSITIF DE DÉTERMINATION DE PUCCH DE LIVRE DE CODES HARQ-ACK RETARDÉ

(43) Date of publication of application: 11.10.2023
(73) Proprietor: ZTE Corporation, Shenzhen, Guangdong 518057 (CN)
(72) Inventor: GOU, Wei, Shenzhen, Guangdong 518057 (CN); HAO, Peng, Shenzhen, Guangdong 518057 (CN); ZHANG, Junfeng, Shenzhen, Guangdong 518057 (CN); ZHANG, Chenchen, Shenzhen, Guangdong 518057 (CN)
(74) Representative: Vossius & Partner Patentanwälte Rechtsanwälte mbB
(86) International application number: PCT/CN2021/070489
(87) International publication number: WO 2022/147687

(56) References cited:
- WO-A1-2020/225198
- WO-A1-2021/046833
- NEC: "UE feedback enhancements for HARQ-ACK", vol. RAN WG1, no. e-Meeting; 20201026 - 20201113, 23 October 2020 (2020-10-23), XP051945431, Retrieved from the Internet <URL:https://ftp.3gpp.org/tsg_ran/WG1_RL1/TSGR1_103-e/Docs/R1-2008941.zip R1-2008941-UE feedback enhancements for HARQ-ACK.docx> [retrieved on 20201023]
- SAMSUNG: "HARQ-ACK feedback enhancements for Rel-17 URLLC/IIoT", vol. RAN WG1, no. e-Meeting; 20201026 - 20201111, 23 October 2020 (2020-10-23), XP051945337, Retrieved from the Internet <URL:https://ftp.3gpp.org/tsg_ran/WG1_RL1/TSGR1_103-e/Docs/R1-2008159.zip R1-2008159 HARQ-ACK enhancements.docx> [retrieved on 20201023]
- NEC: "UE feedback enhancements for HARQ-ACK", 3GPP DRAFT; R1-2008941, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 23 October 2020 (2020-10-23), Mobile Competence Centre ; 650, route des Lucioles ; F-06921 Sophia-Antipolis Cedex ; France , XP051945431
- VIVO: "HARQ-ACK enhancements for Rel-17 URLLC", 3GPP DRAFT; R1-2005374, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 8 August 2020 (2020-08-08), Mobile Competence Centre ; 650, route des Lucioles ; F-06921 Sophia-Antipolis Cedex ; France , XP051917399

## Description

### TECHNICAL FIELD

The disclosure relates generally to wireless communications, including but not limited to methods and devices for determining PUCCH of delayed HARQ-ACK codebook.

### BACKGROUND

The standardization organization Third Generation Partnership Project (3GPP) is currently in the process of specifying a new Radio Interface called 5G New Radio (5G NR) as well as a Next Generation Packet Core Network (NG-CN or NGC). The 5G NR will have three main components: a 5G Access Network (5G-AN), a 5G Core Network (5GC), and a User Equipment (UE). In order to facilitate the enablement of different data services and requirements, the elements of the 5GC, also called Network Functions, have been simplified with some of them being software based, and some being hardware based, so that they could be adapted according to need.
3GPP DRAFT; R1-2008941 discloses that, in case PUCCH resource for SPS HARQ-ACK is not available due to collision with DL symbol or flexible symbol, the HARQ-ACK for SPS PDSCH will be delayed to next available PUCCH resource.
3GPP DRAFT; R1-2008159 discloses that a UE determines a set of SPS PDSCHs with corresponding HARQ-ACK information provided by a PUCCH transmission and a PUCCH resource for the PUCCH transmission based on Kl value, and semi-static TDD configuration.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

At least one aspect is directed to a system, method, apparatus, or a computer-readable medium. In particular, a method performed by a wireless communication device according to claim 1 is provided. Further, a wireless communication device according to claim 8 is provided. A method performed by a wireless communication node according to claim 14 is also provided.

### BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the scope, or applicability of the present solution. It should be noted that for clarity and ease of illustration, these drawings are not necessarily drawn to scale.
FIG. 1 illustrates an example cellular communication network in which techniques disclosed herein may be implemented, in accordance with an embodiment of the present disclosure;
FIG. 2 illustrates a block diagram of an example base station and a user equipment device, in accordance with some embodiments of the present disclosure;
FIG. 3 shows a diagram illustrating an example scenario of imbalanced HARQ-ACK feedback, , in accordance with some embodiments of the present disclosure; and
FIG. 4 shows a flowchart illustrating a method for wireless communication performed by a wireless communication device, in accordance with some embodiments of the present disclosure;

### DETAILED DESCRIPTION

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

### 1. Mobile Communication Technology and Environment

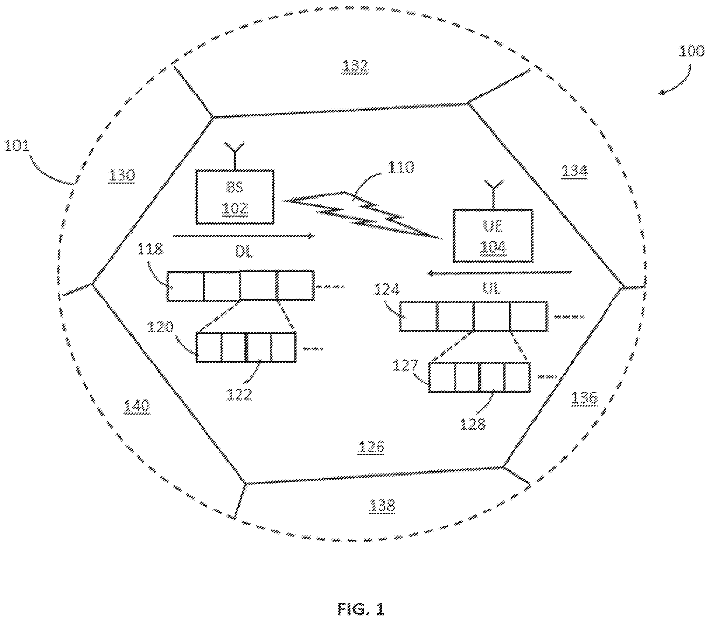

FIG. 1 illustrates an example wireless communication network, and/or system, 100 in which techniques disclosed herein may be implemented, in accordance with an embodiment of the present disclosure. In the following discussion, the wireless communication network 100 may be any wireless network, such as a cellular network or a narrowband Internet of things (NB-IoT) network, and is herein referred to as "network 100." Such an example network 100 includes a base station 102 (hereinafter "BS 102"; also referred to as wireless communication node) and a user equipment device 104 (hereinafter "UE 104"; also referred to as wireless communication device) that can communicate with each other via a communication link 110 (e.g., a wireless communication channel), and a cluster of cells 126, 130, 132, 134, 136, 138 and 140 overlaying a geographical area 101. In FIG. 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127, which may include data symbols 122/128. In the present disclosure, the BS 102 and UE 104 are described herein as non-limiting examples of "communication nodes," generally, which can practice the methods disclosed herein. Such communication nodes may be capable of wireless and/or wired communications, in accordance with various embodiments of the present solution.

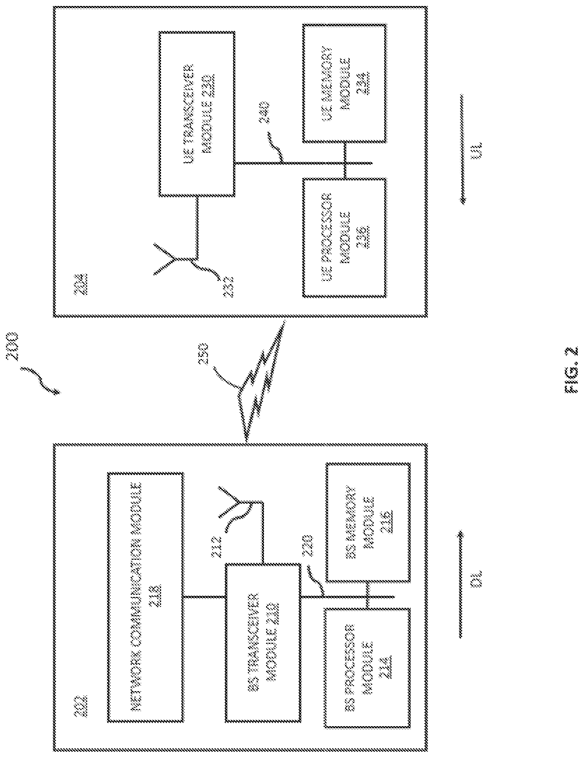

FIG. 2 illustrates a block diagram of an example wireless communication system 200 for transmitting and receiving wireless communication signals (e.g., OFDM/OFDMA signals) in accordance with some embodiments of the present solution. The system 200 may include components and elements configured to support known or conventional operating features that need not be described in detail herein. In one illustrative embodiment, system 200 can be used to communicate (e.g., transmit and receive) data symbols in a wireless communication environment such as the wireless communication environment 100 of FIG. 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in FIG. 2. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure.

In accordance with some embodiments, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some embodiments, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 may be coordinated in time such that the uplink receiver circuitry is coupled to the uplink antenna 232 for reception of transmissions over the wireless transmission link 250 at the same time that the downlink transmitter is coupled to the downlink antenna 212. Conversely, the operations of the two transceivers 210 and 230 may be coordinated in time such that the downlink receiver is coupled to the downlink antenna 212 for reception of transmissions over the wireless transmission link 250 at the same time that the uplink transmitter is coupled to the uplink antenna 232. In some embodiments, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative embodiments, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various embodiments, the BS 202 may be an evolved node B (eNB), a serving eNB, a target eNB, a femto station, or a pico station, for example. In some embodiments, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some embodiments, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bidirectional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

The Open Systems Interconnection (OSI) Model (referred to herein as, "open system interconnection model") is a conceptual and logical layout that defines network communication used by systems (e.g., wireless communication device, wireless communication node) open to interconnection and communication with other systems. The model is broken into seven subcomponents, or layers, each of which represents a conceptual collection of services provided to the layers above and below it. The OSI Model also defines a logical network and effectively describes computer packet transfer by using different layer protocols. The OSI Model may also be referred to as the seven-layer OSI Model or the seven-layer model. In some embodiments, a first layer may be a physical layer. In some embodiments, a second layer may be a Medium Access Control (MAC) layer. In some embodiments, a third layer may be a Radio Link Control (RLC) layer. In some embodiments, a fourth layer may be a Packet Data Convergence Protocol (PDCP) layer. In some embodiments, a fifth layer may be a Radio Resource Control (RRC) layer. In some embodiments, a sixth layer may be a Non Access Stratum (NAS) layer or an Internet Protocol (IP) layer, and the seventh layer being the other layer.

### 2. Systems and Methods for Determining PUCCH of Delayed HARQ-ACK Codebook

In new radio (NR) Releases 15 and 16 (Rel-15/16), for a semi-persistent scheduling (SPS) physical downlink shared channel (PDSCH) reception ending in slot *n,* the wireless communication device 104 or 204 can transmit the physical uplink control channel (PUCCH) in slot *n+k* where *n* and *k* are integers. The parameter *k* is provided by the PDSCH to hybrid automatic repeat request feedback (PDSCH-to-HARQ_feedback) timing indicator field in downlink control information (DCI) format 1_0 or, if present, in DCI format 1_1/1_2 activating the SPS PDSCH reception. If the wireless communication device 104 or 204 detects a DCI format 1_1/1_2 that does not include a PDSCH-to-HARQ_feedback timing indicator field, *k* can be provided by the *dl-DataToUL-ACK* parameter from the wireless communication node 102 or 202.

However, if slot *n+k* is not an uplink slot, the wireless communication device 104 or 204cannot transmit the PUCCH with HARQ-ACK codebook. Usually, this is not an issue when the SPS periodicity is no less than 10ms because the network can always make sure the slot *n+k* is an uplink slot by implementation. However, in the case where SPS periodicity is relatively low (e.g., one slot), it would be very difficult or even impossible to guarantee that the slot *n+k* is an uplink slot. An example time division duplex (TDD) configuration with one-slot periodicity can be 'DDDDU', where 'D' refers to a downlink slot and 'U' refers to an uplink slot. When SPS periodicity is one slot, the use of one fixed HARQ-ACK timing value *k*, as required by Rel-15/16, does not guarantee a feasible solution to determine a proper uplink (UL) slot for transmission of HARQ-ACK associated with each downlink (DL) SPS slot.

A first proposal to address this technical problem would be to still indicate one *k* value, and if the indicated *n+k* slot is a DL slot, the wireless communication device 104 or 204 will defer to the first available PUCCH resource or an uplink slot configured by RRC. A second proposal would be to indicate a set of *k* values where one *k* value to be used for one SPS transmission is in a time window configured by RRC. The RRC is to configure one or more sets of *k* values. If multiple sets are configured, the wireless communication device 104 or 204 can chose one set based on the PDSCH-to-HARQ_feedback timing indicator field in the activating DCI.

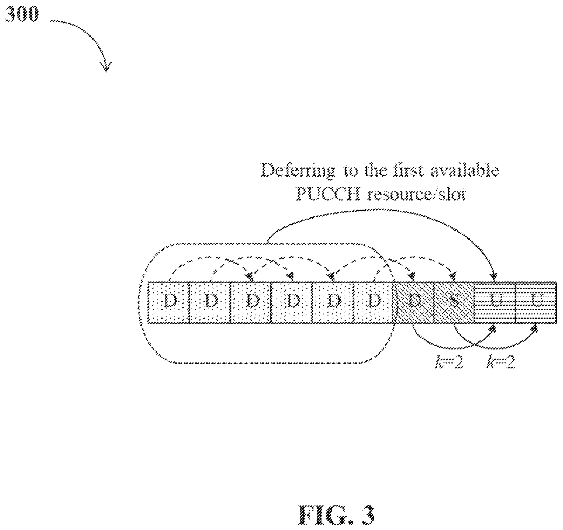

Both proposals still present some technical problems that need to be addressed. For instance, the first proposal that always defers to the first valid PUCCH resource/slot for all SPS occasions will incur imbalanced HARQ-ACK feedback. Such imbalance would be detrimental to PUCCH reliability for ultra reliable and low latency communications (URLLC). Referring to FIG. 3, a diagram 300 illustrating an example of imbalanced HARQ-ACK feedback is shown. Squares with the letter "D" represent downlink slots, the square with the letter "S" represents a flexible slot, and the squares with the letter "U" represent uplink slots. In the example scenario of FIG. 3, the parameter *k* is equal to two, and the HARQ-ACKs (e.g., dashed arrows) of the SPS in the first 6 DL slots (slots with dotted background) are repeatedly delayed until a first UL slot is available. In this scenario, a total of seven HARQ-ACKs are transmitted in the first UL slot, and one HARQ-ACK (associated with the flexible slot) is transmitted in the second UL slot. As such, the transmission load of HARQ-ACK is severely imbalanced in the 2 UL slots shown in FIG. 3. Also, the first proposal lacks a clear definition of "next (or first) available PUUCH," and does not address codebook (CB) construction and multiplexing. The second proposal requires that a new *k* set is defined relative to the existing one, and the *k* set is bound to an RRC configuration window, which will introduce unnecessary restrictions.

Various embodiments described herein address the above-mentioned technical problems. Such embodiments can be applicable to the case where PUCCH is determined for any uplink control information UCI. For example, UCI can include any combination of HARQ-ACK, scheduling request (SR) information or channel status information (CSI). In the following, the delayed HARQ-ACK (also referred to hereinafter as the delayed HARQ-ACK codebook) is used as an example for description, but should not be interpreted as limiting.

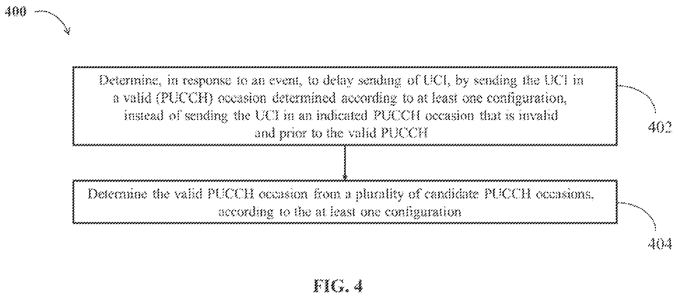

Referring now to FIG. 4, a flowchart illustrating a method for wireless communication performed by a wireless communication device 104 or 204 is shown, in accordance with some embodiments of the present disclosure. The method 400 includes the wireless communication device 104 or 204 determining, in response to an event, to delay sending of UCI, by sending the UCI in a valid (PUCCH) occasion determined according to at least one configuration, instead of sending the UCI in an indicated PUCCH occasion that is invalid and prior to the valid PUCCH (STEP 402). The method 400 includes the wireless communication device 104 or 204 determining the valid PUCCH occasion from a plurality of candidate PUCCH occasions, according to the at least one configuration (STEP 404).

As used herein, a PUCCH occasion can refer to the PUCCH resource or the slot where the PUCCH resource is to be transmitted (or located). The at least one configuration may be pre-arranged/agreed/negotiated between the wireless communication node 102 or 202 and the wireless communication device 104 or 204. For instance, the wireless communication node 102 or 202 and the wireless communication device 104 or 204 can negotiate (or agree on) the at least one configuration via some signaling or communication(s) between them. In some implementations, the event can include at least one of receiving, by the wireless communication device 104 or 204 from the wireless communication node 102 or 202, a signaling to indicate the at least one configuration. The event may include determining, by the wireless communication device 104 or 204, that the indicated PUCCH occasion is invalid for sending the UCI. The signaling can include a downlink control information (DCI) signaling, a radio resource control (RRC) signaling, a pre-arrangement signaling, an agreement or confirmation signaling, or a negotiation signaling. The indicated PUCCH occasion that is invalid can include a PUCCH occasion overlapping with one or more downlink symbols, or a PUCCH occasion overlapping with one or more symbols not configured to transmit PUCCH occasions.

The wireless communication device 104 or 204 can determine a valid PUCCH for a HARQ-ACK codebook (e.g., a delayed HARQ-ACK codebook), according to at least one of various aspects or condition settings. According to a first aspect or condition setting, responsive to determining a PUCCH for the delayed HARQ-ACK codebook from slots subsequent to the indicated slot, the wireless communication device 104 or 204 can select the PUCCH resource(s) from preconfigured PUCCH resource sets in various ways. According to a first embodiment of the first condition setting, the wireless communication device 104 or 204 can select the PUCCH resource(s) from the PUCCH resource set configured for semi-persistent scheduling (SPS) configuration. For example, the PUCCH resource set (for SPS configuration) can be configured by the wireless communication node 102 or 202 signaling *SPS*-*PUCCH*-*AN-List-r16* to the wireless communication device 104 or 204. According to a second embodiment of the first condition setting, the wireless communication device 104 or 204 can select the PUCCH resource(s) from the PUCCH resource set configured for SPS configuration and the PUCCH resource set configured for dynamic PDSCH. For example, the PUCCH resource set (for dynamic PDSCH) can be configured by the wireless communication node 102 or 202 signaling *PUCCH*-*ResourceSet* to the wireless communication device 104 or 204. According to a third embodiment of the first condition setting, the wireless communication device 104 or 204 can select the PUCCH resource(s) from the PUCCH resource set configured for dynamic PDSCH (e.g., configured by signaling *PUCCH*-*ResourceSet*)*.* The wireless communication node 102 or 202 may configure the wireless communication device 104 or 204 to use one of the first, second or third embodiments through signaling, such as DCI signaling or radio resource control (RRC) signaling. The wireless communication node 102 or 202 and the wireless communication device 104 or 204 may directly agree to use one of the three embodiments (of the first condition setting) for selecting the PUCCH resource(s) described above. For instance, if only one of these embodiments is adopted (e.g., by a Standard Specification) for use, no signaling will be needed to indicate the usable (or available) PUCCH resource set.

In the NR system, there are three attributes for the orthogonal frequency division multiplexing (OFDM) symbols in a given slot, which are downlink OFDM symbols (denoted as D), uplink OFDM symbols (denoted as U) and flexible OFDM symbols (denoted as F or S). Among them, the flexible OFDM symbols can be dynamically configured as D or U. That is, if the wireless communication node 102 or 202 needs to change the F symbol attribute, it can reconfigure part or all of the F symbols as D or U symbols through a DCI signaling. If an F symbol is dynamically configured as U, the wireless communication device 104 or 204 can use the F symbol to transmit PUCCH. Therefore, a rule or condition specifying the attributes of the OFDM symbols that the PUCCH can use should be specified for determining a PUCCH for the delayed HARQ-ACK codebook.

According to a second aspect or condition setting, responsive to determining a PUCCH for the delayed HARQ-ACK codebook from slots subsequent the indicated slot, the attributes of the OFDM symbols that can be used by the PUCCH can be set according to various embodiments. According to a first embodiment of the second condition setting, responsive to determining the PUCCH for the delayed HARQ-ACK codebook, the wireless communication device 104 or 204 can determine the PUCCH symbols only from the symbol set composed of UL symbols. According to a second embodiment of the second condition setting, responsive to determining the PUCCH for the delayed HARQ-ACK codebook, the wireless communication device 104 or 204 can determine the PUCCH symbols from a symbol set composed of the U symbols and some specific F symbols. Here, the specific F symbols are F symbols arranged (or located) after the start symbol (including) of the original (or indicated) PUCCH of the delayed HARQ-ACK codebook (and/or F symbols positioned before a symbol that is after the PUSCH preparation time *T*_{proc,2} for the corresponding PUSCH timing capability in TS 38.214 assuming *d*_{2,1} = 1 after a last symbol of a CORESET where the UE is configured to monitor PDCCH for DCI format 2_0) .

As an example of the second embodiment (of the second condition setting) for setting the attributes of the OFDM symbols that can be used, assume that the original (or indicated) PUCCH of the delayed HARQ-ACK codebook is configured to use symbols numbered six through nine in a slot. Also, suppose that under TDD, the symbol attributes in a slot are configured such that symbols numbered zero through four are D symbols, symbols numbered five through ten are F symbols, and symbols numbered 11 through 13 are U symbols. In this example, in response to determining the PUCCH for the delayed HARQ-ACK codebook, symbols numbered six through 13 can be used. Among them, the symbols numbered six through ten are the aforementioned specific F symbols, and the symbols numbered 11 through 13 are U symbols. The F symbol number five cannot be used since the original (or indicated) PUCCH of the delayed HARQ-ACK codebook is configured to use symbols numbered six through nine. If symbols numbered six through ten are configured as F symbols in a slot, then the wireless communication node 102 or 202 can ensure that they are converted to U symbols, and the wireless communication node 102 or 202 can use them for transmitting the PUCCH for the delayed HARQ-ACK codebook.

According to a third embodiment (of the second condition setting) for setting usable (or available) OFDM symbols, the symbol set that can be used for transmitting the PUCCH can be composed of U symbols and F symbols converted to U symbols. In other words, all F symbols that are dynamically converted by the wireless communication node 102 or 202 to U symbols as well as U symbols can be used for the PUCCH. The wireless communication node 102 or 202 can signal/communicate the conversion of F symbols to U symbols to the wireless communication device 104 or 204. If no F symbols are converted to U symbols, then only U symbols can be used. The wireless communication node 102 or 202 may configure the wireless communication device 104 or 204 to use one of the first, second or third embodiments for setting usable (or available) OFDM symbols through signaling, such as DCI signaling or RRC signaling, or the wireless communication node 102 or 202 and the wireless communication device 104 or 204 may directly agree which embodiment to use. For instance, if only one of these embodiments is adopted (e.g., by a Standard Specification) for use, no signaling will be needed to indicate the usable (or available) OFDM symbols.

According to a third aspect or condition setting, responsive to determining a valid PUCCH for the delayed HARQ-ACK codebook among slots subsequent slot to the indicated slot, the wireless communication device 104 or 204 can determine the PUCCH resource(s) based on the size of the delayed HARQ-ACK codebook according to various embodiments. The wireless communication node 102 or 202 can preconfigure the size of the delayed HARQ-ACK codebook. According to a first embodiment of the third condition setting, the wireless communication device 104 or 204 can determine a PUCCH (or PUCCH resource(s)) according to the size of the delayed HARQ-ACK codebook and the PUCCH end symbol (or start symbol). Specifically, the wireless communication device 104 or 204 can consider each slot according to the order of the slot within the subsequent slots, and select a PUCCH that (i) can effectively carry the size of the delayed HARQ-ACK codebook, and (ii) has the earliest end (or start) in the slot. The wireless communication device 104 or 204 can check various PUCCH occasions from the subsequent slots until it determines a PUCCH that meets the above requirements.

For example, considering the slot m according to the order of the slot within the subsequent slots, the wireless communication device 104 or 204 can select a PUCCH to carry the HARQ-ACK codebook if it can carry the delayed HARQ-ACK codebook (e.g., the size of the delayed HARQ-ACK codebook is within the configured UCI size range for the PUCCH) and if it has earliest end (or start) in slot m. If multiple PUCCHs are selected according to the above requirements, the wireless communication device 104 or 204 can select the PUCCH with the smallest (or largest) frequency domain physical resource block (PRB) index.

According to a second embodiment of the third condition setting, the wireless communication device 104 or 204 can determine a PUCCH according to the size of the delayed HARQ-ACK codebook, the PUCCH format, and the PUCCH end symbol (or start symbol). Specifically, considering each slot according to the order of the slot within the subsequent slots, the wireless communication device 104 or 204 can select a PUCCH that (i) can effectively carry the size of the delayed HARQ-ACK codebook, (ii) has the same PUCCH format as the original (or indicated) PUCCH of the delayed HARQ-ACK codebook, and (iii) has the earliest end (or start) in the slot. So, this PUCCH will be selected to carry the delayed HARQ-ACK codebook. The wireless communication device 104 or 204 can check various PUCCH occasions from the subsequent slots until it determines a PUCCH that meets the above requirements.

For example, considering the slot m according to the order of the slot within the subsequent slots, the wireless communication device 104 or 204 can select a PUCCH to carry the HARQ-ACK codebook if it can carry the delayed HARQ-ACK codebook (e.g., the size of the delayed HARQ-ACK codebook is within the configured UCI szie range for the PUCCH), and the PUCCH has the same PUCCH format as the original (or indicated) PUCCH of the delayed HARQ-ACK codebook, and the PUCCH has the earliest end (or start) in slot m. If multiple PUCCHs are selected according to the above requirements, the wireless communication device 104 or 204 can select the PUCCH with the smallest (or largest) frequency domain PRB index.

According to a third embodiment of the third condition setting, the wireless communication device 104 or 204 can determine a PUCCH according to the size of the delayed HARQ-ACK codebook, the PUCCH format, the number of PUCCH symbols, and the PUCCH end symbol (or start symbol). It is to be noted that the symbol count may vary in PUCCHs with the same format. Specifically, considering each slot according to the order of the slot within the subsequent slots, the wireless communication device 104 or 1204 can select a PUCCH that (i) can effectively carry the size of the delayed HARQ-ACK codebook (e.g., the size of the delayed HARQ-ACK codebook is within the configured UCI size range for the PUCCH), (ii) has the same PUCCH format as the original delayed HARQ-ACK codebook PUCCH, (iii) has the same the number of symbols as the original PUCCH (or a number of symbols not less than the number of symbols of the original PUCCH), and has the earliest end (or start) in the slot. The wireless communication device 104 or 204 can select the PUCCH satisfying these requirements to carry the delayed HARQ-ACK codebook. The wireless communication device 104 or 204 can repeatedly check various PUCCH occasions from the subsequent slots until it determines a PUCCH that meets the above requirements.

For example, according to the slot m according to the order of the slot within the subsequent slots, the wireless communication device 104 or 204 can select a PUCCH if (i) it can carry the delayed HARQ-ACK codebook (e.g., the size of the delayed HARQ-ACK codebook is within the configured UCI size range for the PUCCH), (ii) it has the same PUCCH format as the original delayed HARQ-ACK codebook PUCCH, (iii) it has same the number of symbols as the original PUCCH (or a number of symbols not less than the number of symbols of the original PUCCH), and (iv) it has the earliest end (or start) in slot m. The wireless communication device 104 or 204 can select the PUCCH satisfying these requirements to carry the delayed HARQ-ACK codebook. If multiple PUCCHs are selected according to the above requirements, the wireless communication device 104 or 204 can select the PUCCH with the smallest (or largest) frequency domain PRB index.

According to a fourth embodiment of the third condition setting, the wireless communication device 104 or 204 can determine a PUCCH according to the size of the delayed HARQ-ACK codebook, the number of PUCCH symbols, and the PUCCH end symbol (or start symbol). Specifically, considering the slot according to the order of slot within the subsequent slots, the wireless communication device 104 or 204 can select a PUCCH that (i) can effectively carry the size of the delayed HARQ-ACK codebook, (ii) has the same number of symbols as the original PUCCH (or a number of symbols not less than the number of symbols of the original PUCCH), (iii) has the earliest end (or start) in the slot. The wireless communication device 104 or 204 can select the PUCCH satisfying these requirements to carry the delayed HARQ-ACK codebook. The wireless communication device 104 or 204 can check various PUCCH occasions from the subsequent slots until it determines a PUCCH that meets the above requirements. If multiple PUCCHs are selected according to the above requirements, the wireless communication device 104 or 204 can select the PUCCH with the smallest (or largest) frequency domain PRB index.

According to a fifth embodiment of the third aspect, the wireless communication device 104 or 204 can determine a PUCCH according to the original (or indicated) PUCCH of the delayed HARQ-ACK codebook. Specifically, considering the slot according to the order of the slot within the subsequent slots, the wireless communication device 104 or 204 can select a PUCCH which has the same configuration (e.g., format, symbol count and/or symbol locations, among others. Only the slot position is different.) as the original PUCCH of the delayed HARQ-ACK codebook. The wireless communication device 104 or 204 can check various PUCCH occasions from the subsequent slots until it determines a PUCCH that meets this requirement of similarity with the original PUCCH.

For example, considering the slot m according to the order of the slot within the subsequent slots, the wireless communication device 104 or 204 can select the same PUCCH as the original PUCCH of the delayed HARQ-ACK codebook. In other words, the selected PUCCH may be different from the original PUCCH only in terms of slot positions. The wireless communication node 102 or 202 may configure the wireless communication device 104 or 204 to use one of the five embodiments of the third condition setting through signaling, such as DCI signaling or RRC signaling, or the wireless communication node 102 or 202 and the wireless communication device 104 or 204 may directly agree which embodiment to use. For instance, if only one of these embodiments is adopted (e.g., by a Standard Specification) for use, no signaling will be needed to indicate the usable (or available) for the third aspect.

The wireless communication node 102 or 202 and the wireless communication device 104 or 204 may determine the aspect or condition setting, from the aspects or condition settings discussed above, for selecting a PUCCH through signaling or agreement. The wireless communication device 104 or 204 can then check various PUCCH occasions according to the signaled or agreed upon aspect or condition setting, to determine a PUCCH in the subsequent slots until a PUCCH that meets the requirements of the aspect or condition setting is identified and selected. The wireless communication device 104 or 204 can then transmit the delayed HARQ-ACK codebook in the selected PUCCH.

In the following, few examples illustrating how to use the above three aspects to determine a PUCCH for transmitting the delayed HARQ-ACK codebook are described. According to a first illustrative example, it is assumed that the PUCCH resource set can be configured for the wireless communication device 104 or 204 as described below, and these PUCCH resources can be assumed in each slot. The PUCCH resource set configured for SPS configuration can include PUCCH resources defined as:
- PUCCH set0 for SPS configuration: size range 1~2bit; PUCCH1={start symbol #11, continuous symbol number: 2, format 0},
- PUCCH set1 for SPS configuration: size range 3~6bit; PUCCH2={start symbol #6, continuous symbol number: 4, format 3},
- PUCCH set2 for SPS configuration: size range 7~12bit; PUCCH3={start symbol #0, continuous symbol number: 9, format 3}, and
- PUCCH set3 for SPS configuration: the size range is greater than 12bit; PUCCH4={start symbol #0, continuous symbol number: 6, format 3}.

The PUCCH resource set configured for dynamic PDSCH can includes PUCCH resources defined as:
- PUCCH set0: size range 1~2bit; PUCCH1-1={start symbol #12, continuous symbol number: 2, format 0}, PUCCH1-2={start symbol #4, continuous symbol number: 4, format 1}.
- PUCCH set1: size range 3~12bit; PUCCH2-1={start symbol #0, continuous symbol number: 6, format 3}, PUCCH2-2={start symbol #3, continuous symbol number: 2, format 2}.
- PUCCH set2: size range 13~24bit; PUCCH3-1={start symbol #0, continuous symbol number: 9, format 3}, PUCCH3-2={start symbol #4, continuous symbol number: 6, format 4}.
- PUCCH set3: The size range is greater than 24bit; PUCCH4-1={start symbol #0, continuous symbol number: 6, format 3}, PUCCH4-2={start symbol #4, continuous symbol number: 6, format 3}.

Assume that the slot configuration of a TDD system is as shown in FIG. 3, and that the symbol configuration in the S slot is such that symbols numbered zero to four are D symbols, symbols numbered five to ten are F symbols, and symbols numbered 11 to 13 are U symbols. If the wireless communication node 102 or 202 indicates that a one-bit HARQ-ACK codebook is to use PUCCH1 to be transmitted in slot m (assuming that slot m is the third slot in FIG.3). However, since slot m is a D slot, the HARQ-ACK codebook PUCCH1 cannot be transmitted in slot m. The wireless communication node 102 or 202 and the wireless communication device 104 or 204 can agree to delay the transmission of the HARQ-ACK codebook to a valid PUCCH according to the second embodiment of the first aspect (or condition setting), the first embodiment of the second aspect (or condition setting) and the first embodiment of the third aspect (or condition setting).

The wireless communication device 104 or 204 can sequentially try to determine a PUCCH in the slots after slot m according to the above three conditions, until it determines the PUCCH that meets the requirements. Correspondingly, the wireless communication device 104 or 204 can use the PUCCH to transmit the one-bit HARQ-ACK codebook. The three conditions can be described as (i) a valid PUCCH is determined from any of the configured PUCCH resource sets, (ii) the PUCCH should be located in a U symbol, and (iii) the PUCCH can carry the one-bit HARQ-ACK codebook and the PUCCH has the earliest end symbol in the slot. Given the above assumptions and assuming that slot m is the third slot in FIG. 3 (D slot), the wireless communication device 104 or 204 may determine a valid PUCCH in the S slot and U slot after slot m. The wireless communication device 104 or 204 can try to determine the PUCCH in S slot (no order requirement):
There are twelve PUCCH resources from the aforementioned PUCCH resource sets (including all the PUCCH in sets 0-3 for both SPS configuration and dynamic PDSCH) that satisfy the second embodiment of the first condition setting, that is, all the configured PUCCH resources. There are two PUCCHs from the aforementioned PUCCH resource set that satisfy the first embodiment of the second condition setting. That is, there are two PUCCHs that are in the U symbols numbered 11 to 13, and are referred to hereinafter as PUCCH1 and PUCCH1-1. There is one PUCCH, from the aforementioned PUCCH resource set, that satisfies the first embodiment of the third condition setting (or aspect) related to the size range and the earliest end symbol. The PUCCH is PUCCH1. Therefore, only PUCCH1 satisfies all the above three requirements, and the wireless communication device 104 or 204 can determine PUCCH1 as a valid PUCCH for the one-bit HARQ-ACK codebook in the S slot. If no PUCCH satisfying the requirements is determined in the S slot, the wireless communication device 104 or 204 can continue to determine a PUCCH that meets the requirements in the subsequent U slot. In this case, based on the assumption of this example, the wireless communication device 104 or 204 can determine PUCCH1-2 as the PUCCH that meets the requirements.

According to a second illustrative example, it is assumed that the PUCCH resource set can be configured for the wireless communication device 104 or 204 as described below, and these PUCCH resources can be assumed in each slot. The PUCCH resource set configured for SPS configuration can include PUCCH resources defined as:
- PUCCH set0 for SPS configuration: size range 1~2bit; PUCCH1={start symbol #11, continuous symbol number: 2, format 0}.
- PUCCH set1 for SPS configuration: size range 3~6bit; PUCCH2={start symbol #6, continuous symbol number: 4, format 3}.
- PUCCH set2 for SPS configuration: size range 7~12bit; PUCCH3={start symbol #0, continuous symbol number: 9, format 3}.
- PUCCH set3 for SPS configuration: the size range is greater than 12bit; PUCCH4={start symbol #0, continuous symbol number: 6, format 3}.

The PUCCH resource set configured for dynamic PDSCH can include PUCCH resources defined as:
- PUCCH set0: size range 1~2bit; PUCCH1-1={start symbol #12, continuous symbol number: 2, format 0}, PUCCH1-2={start symbol #4, continuous symbol number: 4, format 1}.
- PUCCH set1: size range 3~12bit; PUCCH2-1={start symbol #0, continuous symbol number: 6, format 3}, PUCCH2-2={start symbol #3, continuous symbol number: 2, format 2}.
- PUCCH set2: size range 13~24bit; PUCCH3-1={start symbol #0, continuous symbol number: 9, format 3}, PUCCH3-2={start symbol #4, continuous symbol number: 6, format 4}.
- PUCCH set3: The size range is greater than 24bit; PUCCH4-1={start symbol #0, continuous symbol number: 6, format 3}, PUCCH4-2={start symbol #4, continuous symbol number: 6, format 3}.

Assume that the slot configuration of a TDD system is as shown in FIG. 3, and that the symbol configuration in the S slot includes the symbols numbered zero to four as D symbols, the symbols numbered five to ten as F symbols, and the symbols numbered 11 to13 as U symbols. If the wireless communication node 102 or 202 indicates that a three-bit HARQ-ACK codebook is to use PUCCH2 to be transmitted in slot m (assuming that slot m is the third slot in FIG.3). However, the HARQ-ACK codebook PUCCH2 cannot be transmitted in slot m because slot m is a D slot. Consequently, the wireless communication node 102 or 202 and the wireless communication device 104 or 204 can agree to delay the transmission of the HARQ-ACK codebook to a valid PUCCH according to predefined (or communicated) requirements or conditions.

Assume here that the requirements or conditions include the above described second embodiment of the first condition setting, the second embodiment of the second condition setting and the fourth embodiment of the third condition setting. The wireless communication device 104 or 204 can sequentially try to determine a PUCCH in the slots subsequent to slot m according to the above three conditions or requirement, until it determines the PUCCH that meets the requirements. The wireless communication device 104 or 204 can then use the determined PUCCH to transmit the three-bits HARQ-ACK codebook.

The three conditions or requirements can be described as (i) a valid PUCCH is determined from ANY of the configured PUCCH resource sets, (ii) the PUCCH is located in the symbol set composed of UL symbols and the specific F symbols, and (iii) the PUCCH can carry the 3 bits HARQ-ACK codebook, the PUCCH has the same number of symbols as the original PUCCH, and the PUCCH has the earliest end symbol in the slot. Here, the specific F symbols are F symbols after the start symbol (including) of the original PUCCH of the delayed HARQ-ACK codebook(and/or F symbols positioned before a symbol that is after the PUSCH preparation time *T*_{proc,2} for the corresponding PUSCH timing capability in TS 38.214 assuming *d*_{2,1} = 1 after a last symbol of a CORESET where the UE is configured to monitor PDCCH for DCI format 2_0). Based on the above assumptions and the assumption that slot m is the third slot in FIG. 3, the wireless communication device 104 or 304 may determine a valid PUCCH in the S slot and U slot(s) after slot m. The wireless communication device 104 or 204 can try to determine the PUCCH in S slot (no order requirement).

There are twelve PUCCH resources from the aforementioned PUCCH resource set that satisfy the first requirement (or the second embodiment of the first condition setting), e.g., all the configured PUCCH resources. There are three PUCCH occasions, from the aforementioned PUCCH resource set, that satisfy the second requirement (or the second embodiment of the second condition setting). Specifically, the symbols of the PUCCH occasions are located in the symbols numbered six to 13, and they are referred hereinafter as PUCCH1, PUCCH2 and PUCCH1-1. There is only one PUCCH occasion, from the above PUCCH resource set, that satisfies the third requirement (or the fourth embodiment of the third condition setting) related to size range, the same or more number of symbols and earliest end symbol. This PUCCH occasion is PUCCH2. Since PUCCH2 satisfies all the above three predefined (or agreed upon) requirements, the wireless communication device 104 or 204 can determine PUCCH2 as a valid PUCCH for transmitting the three-bits HARQ-ACK codebook in the S slot.

If no PUCCH is determined in the S slot to meet the requirements, the wireless communication device 104 or 204 can continue to determine a PUCCH that meets the requirements in the subsequent U slot. In this case, based on the assumptions of this example, the wireless communication device 104 or 204 can determine PUCCH2-1 in the U slot as the PUCCH that meets the requirements.

Once a PUCCH is determined for the delayed HARQ-ACK codebook, an overlap in the time domain may occur. For instance, the determined PUCCH and other uplink channels of the wireless communication device 104 or 204, such as PUCCH or PUSCH, can overlap in time domain. The overlap in time domain calls for a multiplexing mechanism to be used where UCI in overlapping channels is multiplexed into one PUCCH for transmission. In the existing technology, there is no processing solution for multiplexing two PUCCHs carrying HARQ-ACK. In the following various solutions are described.

A first solution relates to a case where the determined PUCCH (denoted as PUCCH_D) for the delayed HARQ-ACK codebook is in slot m, and another HARQ-ACK codebook is also transmitted in slot m, specifically, said another HARQ-ACK codebook is transmitted in a PUCCH (denoted as PUCCH_N) in slot m according to indication information (e.g., physical resource information (PRI) is in DCI). The wireless communication device 104 or 204 concatenates the delayed HARQ-ACK codebook with the other HARQ-ACK codebook in PUCCH_N, such that the HARQ-ACK codebook in PUCCH_D is concatenated at the end of the HARQ-ACK codebook in PUCCH_N. The wireless communication device 104 or 204 transmits the concatenated HARQ-ACK codebook in a PUCCH determined to be in slot m according to the indication information (e.g., PRI) and/or the size of the concatenated HARQ-ACK codebook.

A second optional solution can relate to a case (or scenario) where the determined PUCCH (denoted as PUCCH_Q) for the delayed HARQ-ACK codebook is in slot m, and another HARQ-ACK codebook is also transmitted in slot m, specifically said another HARQ-ACK codebook is transmitted in a PUCCH (denoted as PUCCH_W) in slot m according to indication information (e.g., physical resource information (PRI) is in DCI), and PUCCH_Q and PUCCH_W overlap in the time domain, the wireless communication device 104 or 204 can concatenate the delayed HARQ-ACK codebook with the HARQ-ACK codebook in PUCCH_W. For example, the wireless communication device 104 or 204 can concatenate the delayed HARQ-ACK codebook at the end of the HARQ-ACK codebook in PUCCH_W. The wireless communication device 104 or 204 can transmit the concatenated HARQ-ACK codebook in PUCCH_W or in a PUCCH determined according to the indication information (e.g., PRI) and/or the size of the concatenated HARQ-ACK codebook.

When the wireless communication device 104 or 204 is configured with a semi-static codebook, according to the existing semi-static codebook construction mechanism, the first solution and the second optional solution described above may cause additional HARQ-ACK overhead. For example, if a DL slot corresponding to the PDSCH corresponding to the delayed HARQ-ACK codebook is included in the construction window of the semi-static codebook, the PDSCH in the DL slot will generate additional NACK overhead in the HARQ-ACK codebook in PUCCH_N or PUCCH_W. That is, the PDSCH in the DL slot is generated with the actual HARQ-ACK in the delayed HARQ-ACK codebook, and is also generated with the additional NACK in another HARQ-ACK codebook in PUCCH_N or PUCCH_W. The additional NACK should be avoided if possible. The semi-static codebook construction window can be described as follows. Assuming that a k1 set is {1, 3, 4}, where k1 represents the slot interval between the slot where a PDSCH is located and the slot where the HARQ-ACK of the PDSCH is located. When a HARQ-ACK codebook is transmitted in slot m, the slot corresponding to slot m-k1 (e.g., slot m-1, slot m-3, slot m-4) forms a semi-static codebook construction window. The following optimized options are designed to avoid additional overhead.

According to a third option, the wireless communication device 104 or 204 can be configured with a semi-static codebook, and the delayed HARQ-ACK codebook and another HARQ-ACK codebook will be transmitted in slot m. If the DL slot corresponding to the PDSCH of the delayed HARQ-ACK codebook is in the semi-static codebook construction window (that is, the DL slot is included in the derived slot m-k1), then the existing semi-static codebook construction mechanism can be reused to obtain the final HARQ-ACK codebook including the delayed HARQ-ACK codebook and the HARQ-ACK codebook in PUCCH_N or PUCCH_W. However, responsive to the construction of the final HARQ-ACK codebook, the actual HARQ-ACK should be generated for the PDSCH corresponding to the delayed HARQ-ACK codebook in the DL slot. Otherwise, if the DL slot corresponding to the PDSCH of the delayed HARQ-ACK codebook is not in the semi-static codebook construction window, the wireless communication device 104 or 204 can execute the first solution or the second optional solution, or discard the delayed HARQ-ACK codebook. Accordingly, the third option does not bring additional overhead compared to the first solution and the second optional solution.

Note that in the existing semi-static codebook construction mechanism, given a HARQ-ACK codebook that is indicated to be transmitted in slot m, if the HARQ-ACK of the PDSCH in a DL slot is not indicated to be transmitted in slot m, but through the calculation of slot m-k1, the DL slot can be included in the semi-static codebook construction window. Invalid NACK can be generated in the HARQ-ACK codebook for the PDSCH in the DL slot.

According to a fourth option, a new method of determining the slot position of the PUCCH (denoted as PUCCH_D) of the delayed HARQ-ACK codebook is provided to reduce additional feedback overhead. The slot position can be determined according to the number of slot intervals (denoted as N) between the slot where the PUCCH of the delayed HARQ-ACK codebook is located and the slot where the PDSCH (for example, SPS PDSCH) corresponding to the HARQ-ACK codebook is located. The number of slot intervals should be from the configured k1 set. For example, the wireless communication node 102 or 202 can reasonably configure the k1 set so that N is included in the k1 set.

For example, referring FIG. 3, a PDSCH can be transmitted in the third slot (denoted as slot m), and its HARQ-ACK can be indicated to be transmitted in the fifth slot. Since the fifth slot is a DL slot, the HARQ-ACK will be delayed. The question is to which slot will it be delayed? If through regular configuration, the wireless communication node 102 or 202 wants the wireless communication device 104 or 204 to determine the PUCCH that meets the requirements in slot m+5, then the wireless communication node 102 or 202 can configure 5 in the k1 set. The slot m+5 will be determined as the slot where the delayed HARQ-ACK is located and meets the requirements of the fourth option. Similarly, if the wireless communication node 102 or 202 wants the wireless communication device 104 or 204 to determine the PUCCH that meets the requirements in slot m+6, then the wireless communication node 102 or 202 can configure the k1 set to include 6.

Another option can be viewed as a modified version of the fourth option, In response to determining the PUCCH for the delayed HARQ-ACK codebook, a slot is to be determined satisfies the condition of selecting a k1 value from the k1 set in ascending order. Assuming that the PDSCH corresponding to the delayed HARQ-ACK is in slot m, the determined slot is slot m+k1 for the delayed HARQ-ACK. The wireless communication device 104 or 204 can try to determine the PUCCH from each slot m+k1 in ascending order of k1 values until a PUCCH that meets the requirements is determined. When using the modified version of the fourth option, the number of slot intervals between the slot where the PUCCH determined by the delayed HARQ-ACK codebook is and the slot corresponding to the PDSCH of the delayed HARQ-ACK codebook can always be included in the k1 set. Considering the fourth option and the modified version of the fourth option, it can also be described as: for a slot that is determined and used to transmit the delayed HARQ-ACK codebook, the wireless communication device 104 or 204 would not expect/desire the slot interval (between the slot where delayed the HARQ-ACK codebook is located and another slot where the PDSCH is located) not to be included in the k1 set configured for the wireless communication device 104 or 204. Or, for a slot that is determined and used to transmit the delayed HARQ-ACK codebook, the wireless communication device 104 or 204 would expect/desire the slot interval (between the slot where delayed the HARQ-ACK codebook is located and another slot where the PDSCH is located) to be included in the k1 set configured for the wireless communication device 104 or 204. Accordingly, the wireless communication node 102 or 202 can be expected to configure a reasonable k1 set according to the specific slot structure.

The various embodiments described above and in the claims can be implemented as computer code instructions that are executed by one or more processors of the wireless communication device (or UE) 104 04 204 or the wireless communication node 102 or 202. A computer-readable medium may store the computer code instructions.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the embodiments described in this disclosure will be readily apparent to those skilled in the art, and the general principles defined herein can be applied to other embodiments without departing from the scope of this disclosure. Thus, the disclosure is not intended to be limited to the embodiments shown herein, but is to be accorded the widest scope consistent with the novel features and principles disclosed herein, as recited in the claims below.

## Claims

1. A method comprising:
determining (402), by a wireless communication device (104) in response to an event, to delay sending of uplink control information, UCI, by sending the UCI in a valid second physical uplink control channel, PUCCH, resource determined according to at least one configuration, instead of sending the UCI in an indicated first PUCCH resource that is invalid and prior to the valid second PUCCH resource;
determining (404), by the wireless communication device (104), the valid second PUCCH resource from a plurality of candidate PUCCH resources, according to the at least one configuration, wherein the valid second PUCCH resource is in a slot with a transmission of another UCI;
concatenating, by the wireless communication device (104), the UCI with the another UCI, to produce a concatenated UCI;
determining, by the wireless communication device (104), a valid third PUCCH resource in the slot, according to at least one of indication information or the concatenated UCI; and
transmitting, by the wireless communication device (104) to a wireless communication node (102), the concatenated UCI in the valid third PUCCH resource.

2. The method of claim 1, wherein the UCI comprises at least one of: hybrid automatic repeat request acknowledgement, HARQ-ACK, information, channel state information, CSI, or scheduling request, SR, information.

3. The method of claim 1, wherein determining the valid second PUCCH resource according to the at least one configuration includes determining the valid second PUCCH resource according to at least one of: a condition, a rule, an indication or an instruction, to apply or use in determining the valid second PUCCH resource.

4. The method of claim 1, wherein the event comprises at least one of:
determining, by the wireless communication device (204), that the indicated first PUCCH resource is invalid for sending the UCI,
wherein the indicated first PUCCH resource that is invalid comprises the indicated first PUCCH resource overlapping with one or more downlink symbols, or the indicated first PUCCH resource overlapping with one or more symbols not configured to transmit PUCCH resources.

5. The method of claim 1, wherein the at least one configuration includes at least one of:
a first configuration to determine a set of PUCCH resources from which to select the valid second PUCCH resource,
a second configuration to determine a set of orthogonal frequency-division multiplexing, OFDM, symbols from which to select for the valid second PUCCH resource, or
a third configuration to select the valid second PUCCH resource according to at least one of: a size of the UCI, an end or start symbol of the valid second PUCCH resource, a format of the valid PUCCH resource, a number of symbols in the valid second PUCCH resource, or a configuration of the indicated first PUCCH resource.

6. The method of claim 5, comprising:
determining, by the wireless communication device (204) according to the first configuration, that the set of PUCCH resources from which to select the valid second PUCCH resource comprises:
a first set of PUCCH resources configured for semi-persistent scheduling, SPS, configuration,
a second set of PUCCH resources configured for dynamic physical downlink shared channel, PDSCH, or
the first set of PUCCH resources and the second set of PUCCH resources.

7. The method of claim 6, wherein the second set of PUCCH resources is configured by a PUCCH-ResourceSet parameter.

8. An apparatus (104) comprising:
at least one processor (236); and
a memory (234) storing executable instructions, the executable instructions when executed by the at least one processor cause the at least one processor to:
determine, in response to an event, to delay sending of uplink control information, UCI, by sending the UCI in a valid second physical uplink control channel, PUCCH, resource determined according to at least one configuration, instead of sending the UCI in an indicated first PUCCH resource that is invalid and prior to the valid second PUCCH resource;
determine the valid second PUCCH resource from a plurality of candidate PUCCH resources, according to the at least one configuration, wherein the valid second PUCCH resource is in a slot with a transmission of another UCI;
concatenate the UCI with the another UCI, to produce a concatenated UCI;
determine a valid third PUCCH resource in the slot, according to at least one of indication information or the concatenated UCI; and
transmit, to a wireless communication node (102), the concatenated UCI in the valid third PUCCH resource.

9. The apparatus (104) of claim 8, wherein the UCI comprises at least one of: hybrid automatic repeat request acknowledgement, HARQ-ACK, information, channel state information, CSI, or scheduling request, SR, information.

10. The apparatus (104) of claim 8, wherein in determining the valid second PUCCH resource according to the at least one configuration, the at least one processor is configured to determine the valid second PUCCH resource according to at least one of: a condition, a rule, an indication or an instruction, to apply or use in determining the valid second PUCCH resource.

11. The apparatus (104) of claim 8, wherein the event comprises at least one of:
a determination that the indicated first PUCCH resource is invalid for sending the UCI,
wherein the indicated first PUCCH resource that is invalid comprises the indicated first PUCCH resource overlapping with one or more downlink symbols, or the indicated first PUCCH resource overlapping with one or more symbols not configured to transmit PUCCH resources.

12. The apparatus (104) of claim 8, wherein the at least one configuration includes at least one of:
a first configuration to determine a set of PUCCH resources from which to select the valid second PUCCH resource,
a second configuration to determine a set of orthogonal frequency-division multiplexing, OFDM, symbols from which to select for the valid second PUCCH resource, or
a third configuration to select the valid second PUCCH resource according to at least one of: a size of the UCI, an end or start symbol of the valid second PUCCH resource, a format of the valid second PUCCH resource, a number of symbols in the valid second PUCCH resource, or a configuration of the indicated first PUCCH resource.

13. The apparatus (104) of claim 12, wherein the executable instructions when executed by the at least one processor cause the at least one processor to:
determine, according to the first configuration, that the set of PUCCH resources from which to select the valid second PUCCH resource comprises:
a first set of PUCCH resources configured for semi-persistent scheduling, SPS, configuration,
a second set of PUCCH resources configured for dynamic physical downlink shared channel, PDSCH, or
the first set of PUCCH resources and the second set of PUCCH resources.

14. A method comprising:
receiving, by a wireless communication node (102) from a wireless communication device (104), in response to an event and the wireless communication device (104) determining to delay transmission of uplink control information (UCI), the UCI in a valid second physical uplink control channel (PUCCH) resource determined according to at least one configuration, instead of receiving the UCI in an indicated first PUCCH resource that is invalid and prior to the valid second PUCCH resource;
determining, by the wireless communication node (102), the valid second PUCCH resource from a plurality of candidate PUCCH resources, according to the at least one configuration, wherein the valid second PUCCH resource is in a slot with a reception of another UCI;
determining, by the wireless communication node (102), a valid third PUCCH resource in the slot, according to at least one of indication information or the concatenated UCI, wherein the UCI is concatenated with the another UCI to produce a concatenated UCI;
receiving, by the wireless communication node (102) from the wireless communication device (104), the concatenated UCI in the valid third PUCCH resource.

## Patentansprüche

1. Verfahren, das aufweist:
Bestimmen (402), durch eine drahtlose Kommunikationsvorrichtung (104) als Reaktion auf ein Ereignis, das Senden von Uplink-Steuerinformationen, UCI, zu verzögern, durch Senden der UCI in einer gültigen zweiten physikalischen Uplink-Steuerkanal, PUCCH, Ressource, die gemäß mindestens einer Konfiguration bestimmt wird, anstelle des Sendens der UCI in einer angegebenen ersten PUCCH-Ressource, die ungültig ist und vor der gültigen zweiten PUCCH-Ressource liegt;
Bestimmen (404), durch die drahtlose Kommunikationsvorrichtung (104), der gültigen zweiten PUCCH-Ressource aus mehreren Kandidaten-PUCCH-Ressourcen gemäß der mindestens einen Konfiguration, wobei sich die gültige zweite PUCCH-Ressource in einem Slot mit einer Übertragung von anderen UCI befindet;
Verketten, durch die drahtlose Kommunikationsvorrichtung (104), der UCI mit den anderen UCI, um verkettete UCI zu erzeugen;
Bestimmen, durch die drahtlose Kommunikationsvorrichtung (104), einer gültigen dritten PUCCH-Ressource in dem Slot gemäß Anzeigeinformationen und/oder den verketteten UCI; und
Senden, durch die drahtlose Kommunikationsvorrichtung (104) an einen drahtlosen Kommunikationsknoten (102), der verketteten UCI in der gültigen dritten PUCCH-Ressource.

2. Verfahren nach Anspruch 1, wobei die UCI mindestens eines aufweisen von: hybride automatische Wiederholungsanforderungsbestätigungs-, HARQ-ACK-, Informationen, Kanalzustandsinformationen, CSI, und/oder Planungsanforderungs-, SR-, Informationen.

3. Verfahren nach Anspruch 1, wobei das Bestimmen der gültigen zweiten PUCCH-Ressource gemäß der mindestens einen Konfiguration das Bestimmen der gültigen zweiten PUCCH-Ressource gemäß mindestens einem aufweist von: einer Bedingung, einer Regel, einer Anzeige und/oder einer Anweisung, die bei der Bestimmung der gültigen zweiten PUCCH-Ressource angewendet oder verwendet werden soll.

4. Verfahren nach Anspruch 1, wobei das Ereignis mindestens eines aufweist von:
Bestimmen, durch die drahtlose Kommunikationsvorrichtung (204), dass die angegebene erste PUCCH-Ressource zum Senden der UCI ungültig ist,
wobei die angegebene erste PUCCH-Ressource, die ungültig ist, die angegebene erste PUCCH-Ressource, die sich mit einem oder mehreren Downlink-Symbolen überschneidet, oder die angegebene erste PUCCH-Ressource aufweist, die sich mit einem oder mehreren Symbolen überschneidet, die nicht konfiguriert sind, PUCCH-Ressourcen zu übertragen.

5. Verfahren nach Anspruch 1, wobei die mindestens eine Konfiguration mindestens eine aufweist von:
eine erste Konfiguration, um einen Satz von PUCCH-Ressourcen zu bestimmen, aus denen die gültige zweite PUCCH-Ressource ausgewählt werden soll,
eine zweite Konfiguration, um einen Satz von orthogonalen Frequenzmultiplex, OFDM, Symbolen zu bestimmen, aus denen die gültige zweite PUCCH-Ressource ausgewählt werden soll, oder
eine dritte Konfiguration, um die gültige zweite PUCCH-Ressource gemäß mindestens einem einer Größe der UCI, einem End- oder Startsymbol der gültigen zweiten PUCCH-Ressource, einem Format der gültigen PUCCH-Ressource, einer Anzahl von Symbolen in der gültigen zweiten PUCCH-Ressource und/oder einer Konfiguration der angegebenen ersten PUCCH-Ressource auszuwählen.

6. Verfahren nach Anspruch 5, das aufweist:
Bestimmen, durch die drahtlose Kommunikationsvorrichtung (204) gemäß der ersten Konfiguration, dass der Satz von PUCCH-Ressourcen, aus denen die gültige zweite PUCCH-Ressource ausgewählt werden soll, aufweist:
einen ersten Satz von PUCCH-Ressourcen, die für eine semi-persistente Planung, SPS, Konfiguration konfiguriert sind,
einen zweiten Satz von PUCCH-Ressourcen, die für einen dynamischen physikalischen gemeinsamen Downlink-Kanal, PDSCH, konfiguriert sind, oder
den ersten Satz von PUCCH-Ressourcen und den zweiten Satz von PUCCH-Ressourcen.

7. Verfahren nach Anspruch 6, wobei der zweite Satz von PUCCH-Ressourcen durch einen PUCCH-ResourceSet-Parameter konfiguriert wird.

8. Vorrichtung (104), die aufweist:
mindestens einen Prozessor (236); und
einen Speicher (234), der ausführbare Befehle speichert, wobei die ausführbaren Befehle, wenn sie von dem mindestens einen Prozessor ausgeführt werden, den mindestens einen Prozessor veranlassen:
als Reaktion auf ein Ereignis zu bestimmen, das Senden von Uplink-Steuerinformationen, UCI, zu verzögern, durch Senden der UCI in einer gültigen zweiten physikalischen Uplink-Steuerkanal, PUCCH, Ressource, die gemäß mindestens einer Konfiguration bestimmt wird, anstelle des Sendens der UCI in einer angegebenen ersten PUCCH-Ressource, die ungültig ist und vor der gültigen zweiten PUCCH-Ressource liegt;
die gültige zweite PUCCH-Ressource aus mehreren Kandidaten-PUCCH-Ressourcen gemäß der mindestens einen Konfiguration zu bestimmen, wobei sich die gültige zweite PUCCH-Ressource in einem Slot mit einer Übertragung von anderen UCI befindet;
die UCI mit den anderen UCI zu verketten, um verkettete UCI zu erzeugen;
eine gültige dritte PUCCH-Ressource in dem Slot gemäß Anzeigeinformationen und/oder den verketteten UCI zu bestimmen; und
die verketteten UCI in der gültigen dritten PUCCH-Ressource an einen drahtlosen Kommunikationsknoten (102) zu senden.

9. Vorrichtung (104) nach Anspruch 8, wobei die UCI mindestens eines aufweisen von: hybride automatische Wiederholungsanforderungsbestätigungs-, HARQ-ACK, Informationen, Kanalzustandsinformationen, CSI, und/oder Planungsanforderungs-, SR, Informationen.

10. Vorrichtung (104) nach Anspruch 8, wobei bei der Bestimmung der gültigen zweiten PUCCH-Ressource gemäß der mindestens einen Konfiguration der mindestens eine Prozessor konfiguriert ist, die gültige zweite PUCCH-Ressource gemäß mindestens einer Bedingung, einer Regel, einer Anzeige und/oder einer Anweisung zu bestimmen, die bei der Bestimmung der gültigen zweiten PUCCH-Ressource angewendet oder verwendet werden soll.

11. Vorrichtung (104) nach Anspruch 8, wobei das Ereignis mindestens eines aufweist von:
eine Bestimmung, dass die angegebene erste PUCCH-Ressource für das Senden der UCI ungültig ist,
wobei die angegebene erste PUCCH-Ressource, die ungültig ist, die angegebene erste PUCCH-Ressource, die sich mit einem oder mehreren Downlink-Symbolen überschneidet, oder die angegebene erste PUCCH-Ressource aufweist, die sich mit einem oder mehreren Symbolen überschneidet, die nicht konfiguriert sind, PUCCH-Ressourcen zu übertragen.

12. Vorrichtung (104) nach Anspruch 8, wobei die mindestens eine Konfiguration mindestens eines aufweist von:
eine erste Konfiguration, um einen Satz von PUCCH-Ressourcen zu bestimmen, aus denen die gültige zweite PUCCH-Ressource ausgewählt werden soll,
eine zweite Konfiguration, um einen Satz von orthogonalen Frequenzmultiplex, OFDM, Symbolen zu bestimmen, aus denen die gültige zweite PUCCH-Ressource ausgewählt werden soll, oder
eine dritte Konfiguration, um die gültige zweite PUCCH-Ressource gemäß mindestens einem einer Größe der UCI, einem End- oder Startsymbol der gültigen zweiten PUCCH-Ressource, einem Format der gültigen PUCCH-Ressource, einer Anzahl von Symbolen in der gültigen zweiten PUCCH-Ressource und/oder einer Konfiguration der angegebenen ersten PUCCH-Ressource auszuwählen.

13. Vorrichtung (104) nach Anspruch 12, wobei die ausführbaren Befehle, wenn sie von dem mindestens einen Prozessor ausgeführt werden, den mindestens einen Prozessor veranlassen:
gemäß der ersten Konfiguration zu bestimmen, dass der Satz von PUCCH-Ressourcen, aus denen die gültige zweite PUCCH-Ressource ausgewählt werden soll, aufweist:
einen ersten Satz von PUCCH-Ressourcen, die für eine semi-persistente Planung, SPS, Konfiguration konfiguriert sind,
einen zweiten Satz von PUCCH-Ressourcen, die für einen dynamischen physikalischen gemeinsamen Downlink-Kanal, PDSCH, konfiguriert sind, oder
den ersten Satz von PUCCH-Ressourcen und den zweiten Satz von PUCCH-Ressourcen.

14. Verfahren, das aufweist:
Empfangen, durch einen drahtlosen Kommunikationsknoten (102) von einer drahtlosen Kommunikationsvorrichtung (104), als Reaktion auf ein Ereignis und darauf, dass die drahtlose Kommunikationsvorrichtung (104) bestimmt, die Übertragung von Uplink-Steuerinformationen, UCI, zu verzögern, der UCI in einer gültigen zweiten physikalischen Uplink-Steuerkanal, PUCCH, Ressource, die gemäß mindestens einer Konfiguration bestimmt wird, anstelle des Empfangens der UCI in einer angegebenen ersten PUCCH-Ressource, die ungültig ist und vor der gültigen zweiten PUCCH-Ressource liegt;
Bestimmen, durch den drahtlosen Kommunikationsknoten (102), der gültigen zweiten PUCCH-Ressource aus mehreren Kandidaten-PUCCH-Ressourcen gemäß der mindestens einen Konfiguration, wobei sich die gültige zweite PUCCH-Ressource in einem Slot mit einem Empfang einer anderen UCI befindet;
Bestimmen, durch den drahtlosen Kommunikationsknoten (102), einer gültigen dritten PUCCH-Ressource in dem Slot gemäß Anzeigeinformationen und/oder den verketteten UCI, wobei die UCI mit den anderen UCI verkettet werden, um verkettete UCI zu erzeugen;
Empfangen, durch den drahtlosen Kommunikationsknoten (102) der verketteten UCI in der gültigen dritten PUCCH-Ressource von der drahtlosen Kommunikationsvorrichtung (104).

## Revendications

1. Procédé, comprenant :
la détermination (402), par un dispositif de communication sans fil (104) en réaction à un événement, de retarder l'envoi d'informations de commande de liaison montante, UCI, en envoyant les UCI dans une deuxième ressource de canal de commande de liaison montante physique, PUCCH, valide, déterminée conformément à au moins une configuration, au lieu d'envoyer les UCI dans une première ressource PUCCH indiquée invalide et antérieure à la deuxième ressource PUCCH valide ;
la détermination (404), par le dispositif de communication sans fil (104), de la deuxième ressource PUCCH valide parmi une pluralité de ressources PUCCH candidates, conformément à ladite au moins une configuration, la deuxième ressource PUCCH valide étant présentée dans un intervalle avec une transmission d'autres UCI ;
1a concaténation, par le dispositif de communication sans fil (104),des UCI avec les autres UCI, pour produire des UCI concaténées ;
la détermination, par le dispositif de communication sans fil (104), d'une troisième ressource PUCCH valide dans l'intervalle, conformément aux informations d'indication et/ou aux UCI concaténées ; et
la transmission, par le dispositif de communication sans fil (104) à un nœud de communication sans fil (102), des UCI concaténées dans la troisième ressource PUCCH valide.

2. Procédé selon la revendication 1, où les UCI comprennent des informations d'accusé de réception de demande de répétition automatique hybride, HARQ-ACK, et/ou des informations d'état de canal, CSI, et/ou des informations de demande de programmation, SR.

3. Procédé selon la revendication 1, où la détermination de la deuxième ressource PUCCH valide conformément à ladite au moins une configuration comprend la détermination de la deuxième ressource PUCCH valide conformément à une condition, et/ou une règle, et/ou une indication et/ou ou une instruction, à appliquer ou à utiliser lors de la détermination de la deuxième ressource PUCCH valide.

4. Procédé selon la revendication 1, où l'événement comprend :
la détermination, par le dispositif de communication sans fil (204), que la première ressource PUCCH indiquée est invalide pour l'envoi des UCI,
où la première ressource PUCCH indiquée invalide comprend la première ressource PUCCH indiquée chevauchant un ou plusieurs symboles de liaison descendante, ou la première ressource PUCCH indiquée chevauchant un ou plusieurs symboles non configurés pour transmettre des ressources PUCCH.

5. Procédé selon la revendication 1, où ladite au moins une configuration comprend :
une première configuration pour déterminer un ensemble de ressources PUCCH dans lequel la deuxième ressource PUCCH valide est sélectionnée,
et/ou une deuxième configuration pour déterminer un ensemble de symboles de multiplexage par répartition orthogonale de la fréquence, OFDM, dans lequel la deuxième ressource PUCCH valide est sélectionnée, et/ou
une troisième configuration pour sélectionner la deuxième ressource PUCCH valide conformément à : une taille des UCI, et/ou un symbole de fin ou de début de la deuxième ressource PUCCH valide, et/ou un format de la ressource PUCCH valide, et/ou un nombre de symboles dans la deuxième ressource PUCCH valide, et/ou une configuration de la première ressource PUCCH indiquée.

6. Procédé selon la revendication 5, comprenant :
la détermination, par le dispositif de communication sans fil (204) conformément à la première configuration, que l'ensemble de ressources PUCCH dans lequel la deuxième ressource PUCCH valide est sélectionnée comprend :
un premier ensemble de ressources PUCCH configurées pour une configuration de programmation semi-persistante, SPS,
un deuxième ensemble de ressources PUCCH configurées pour un canal partagé de liaison descendante physique dynamique, PDSCH, ou
le premier ensemble de ressources PUCCH et le deuxième ensemble de ressources PUCCH.

7. Procédé selon la revendication 6, où le deuxième ensemble de ressources PUCCH est configuré par un paramètre d'ensemble de ressources PUCCH.

8. Dispositif (104), comprenant :
au moins un processeur (236) ; et
une mémoire (234) stockant des instructions exécutables, l'exécution desdites instructions exécutables par ledit au moins un processeur entraînant ledit au moins un processeur à :
déterminer, en réaction à un événement, de retarder de retarder l'envoi d'informations de commande de liaison montante, UCI, en envoyant les UCI dans une deuxième ressource de canal de commande de liaison montante physique, PUCCH, valide, déterminée conformément à au moins une configuration, au lieu d'envoyer les UCI dans une première ressource PUCCH indiquée invalide et antérieure à la deuxième ressource PUCCH valide ;
déterminer la deuxième ressource PUCCH valide parmi une pluralité de ressources PUCCH candidates, conformément à ladite au moins une configuration, la deuxième ressource PUCCH valide étant présentée dans un intervalle avec une transmission d'autres UCI ;
concaténer les UCI avec les autres UCI, pour produire des UCI concaténées ;
déterminer une troisième ressource PUCCH valide dans l'intervalle, conformément aux informations d'indication et/ou aux UCI concaténées ; et
transmettre à un nœud de communication sans fil (102), les UCI concaténées dans la troisième ressource PUCCH valide.

9. Dispositif (104) selon la revendication 8, où les UCI comprennent des informations d'accusé de réception de demande de répétition automatique hybride, HARQ-ACK, et/ou des informations d'état de canal, CSI, et/ou des informations de demande de programmation, SR.

10. Dispositif (104) selon la revendication 8, où, lors de la détermination de la deuxième ressource PUCCH valide conformément à ladite au moins une configuration, ledit au moins un processeur est configuré pour déterminer la deuxième ressource PUCCH valide conformément à une condition, et/ou une règle, et/ou une indication et/ou ou une instruction, à appliquer ou à utiliser lors de la détermination de la deuxième ressource PUCCH valide.

11. Dispositif (104) selon la revendication 8, où l'événement comprend :
la détermination que la première ressource PUCCH indiquée est invalide pour l'envoi des UCI,
où la première ressource PUCCH indiquée invalide comprend la première ressource PUCCH indiquée chevauchant un ou plusieurs symboles de liaison descendante, ou la première ressource PUCCH indiquée chevauchant un ou plusieurs symboles non configurés pour transmettre des ressources PUCCH.

12. Dispositif (104) selon la revendication 8, où ladite au moins une configuration comprend :
une première configuration pour déterminer un ensemble de ressources PUCCH dans lequel la deuxième ressource PUCCH valide est sélectionnée,
et/ou une deuxième configuration pour déterminer un ensemble de symboles de multiplexage par répartition orthogonale de la fréquence, OFDM, dans lequel la deuxième ressource PUCCH valide est sélectionnée, et/ou
une troisième configuration pour sélectionner la deuxième ressource PUCCH valide conformément à : une taille des UCI, et/ou un symbole de fin ou de début de la deuxième ressource PUCCH valide, et/ou un format de la ressource PUCCH valide, et/ou un nombre de symboles dans la deuxième ressource PUCCH valide, et/ou une configuration de la première ressource PUCCH indiquée.

13. Dispositif (104) selon la revendication 12, où l'exécution desdites instructions exécutables par ledit au moins un processeur entraîne ledit au moins un processeur à :
déterminer, conformément à la première configuration, que l'ensemble de ressources PUCCH dans lequel la deuxième ressource PUCCH valide est sélectionnée comprend :
un premier ensemble de ressources PUCCH configurées pour une configuration de programmation semi-persistante, SPS,
un deuxième ensemble de ressources PUCCH configurées pour un canal partagé de liaison descendante physique dynamique, PDSCH, ou
le premier ensemble de ressources PUCCH et le deuxième ensemble de ressources PUCCH.

14. Procédé, comprenant :
la réception, par un nœud de communication sans fil (102) en provenance d'un dispositif de communication sans fil (104), en réaction à un événement, et à la détermination par le dispositif de communication sans fil (104) de retarder la transmission d'informations de commande de liaison montante, UCI, des UCI dans une deuxième ressource de canal de commande de liaison montante physique, PUCCH, valide, déterminée conformément à au moins une configuration, au lieu de recevoir les UCI dans une première ressource PUCCH indiquée invalide et antérieure à la deuxième ressource PUCCH valide ;
la détermination, par le nœud de communication sans fil (102), de la deuxième ressource PUCCH valide parmi une pluralité de ressources PUCCH candidates, conformément à ladite au moins une configuration, la deuxième ressource PUCCH valide étant présentée dans un intervalle avec une transmission d'autres UCI ;
la détermination, par le nœud de communication sans fil (102), d'une troisième ressource PUCCH valide dans l'intervalle, conformément aux informations d'indication et/ou aux UCI concaténée, les UCI étant concaténées avec les autres UCI pour produire des UCI concaténées ; et
la réception, par le nœud de communication sans fil (102) en provenance d'un dispositif de communication sans fil (104), des UCI concaténées dans la troisième ressource PUCCH valide.
